Europäisches Patentamt

European Patent Office

Office européen des brevets

(11) Publication number: **0 155 017**
**B1**

## EUROPEAN PATENT SPECIFICATION

(45) Date of publication of patent specification: **31.05.89**    (51) Int. Cl.⁴: **F 16 K 27/02**

(21) Application number: **85200122.1**

(22) Date of filing: **06.02.85**

(54) Valve body having the form of a flange.

(30) Priority: **28.02.84 NL 8400607**

(43) Date of publication of application:
**18.09.85 Bulletin 85/38**

(45) Publication of the grant of the patent:
**31.05.89 Bulletin 89/22**

(84) Designated Contracting States:
**DE FR GB IT NL**

(56) References cited:
**EP-A-0 083 180**
**DE-A-1 550 307**
**FR-A-1 369 041**
**US-A-1 630 785**
**US-A-3 419 247**
**US-A-3 943 959**

(73) Proprietor: **Amstelstaal B.V.**
**Koningslaan 39**
**NL-1075 AB Amsterdam (NL)**

(72) Inventor: **Lassally, Gunter Martin**
**De Cuserstraat 29**
**NL-1081 CL Amsterdam (NL)**

(74) Representative: **de Vries, Johannes Hendrik**
**Fokke et al**
**Octrooibureau Los en Stigter B.V. P.O. Box**
**20052**
**NL-1000 HB Amsterdam (NL)**

Courier Press, Leamington Spa, England.

## Description

The invention relates to a valve comprising a valve body having a substantially axially extending channel formed therein, said channel at one side being adapted to be connected to a supply line and at the other side to a descharge line, a valve means positioned in the valve body to shut-off the channel passage entirely or partially, wherein the valve body has one side adapted to be connected to an end of a line comprising a thread, the valve body further being provided with passing-through bores through which mounting bolts can extend.

A known valve of the type referred to above is illustrated in the EP—A—0 083 180. This known valve comprises a valve body which is constituted by a pair of blocks, thus offering this valve body angular outer dimensions. Moreover the operating mechanism of the valve means of this known valve extends beyond the outer limitations of said block-shaped valve body. Due to the block-like appearance of this valve body and due to the operating mechanism projecting from the valve body handling this known valve is far from easy and very troublesome. Moreover, the more as so valves of this type mostly are rather heavy and sometimes are very slippery due to outer pollutions, carrying said valves is difficult and a great risk occurs of damaging the operating mechanism projecting from the valve body.

Therefore it is an object of the invention to provide a valve of the type referred to above eliminating the mentioned drawbacks.

The valve according to the invention therefore is characterized in that the valve body substantially forms a cylindrical flange, whereas the dimensions of the flange-shaped valve body are such that the valve means and its operating mechanism as well as the provisions for connecting the valve body to a flanged line and to a threaded line are positioned entirely within the valve body.

Due to the unique combination of these features, namely the cylindrical outer shape of the valve body and the fact that the operating mechanism and the said provisions no longer project from said valve body, the valve according to the invention can be rolled like a wheel, thus avoiding a clumsy and troublesome handling thereof, whereas nevertheless the risk of any damage to the valve is completely eliminated. It is only by the combination of these two features that the desired effect is obtained. Thus the valve shown in the FR—A—1.369.041 indeed comprises a cylindrical valve body, but this does not contribute to an easy handling of this known valve since the operating mechanism of the valve means extends well beyond the outer limitations of said cylindrical valve body. And although the valve illustrated in the US—A—3.419.247 comprises an operating mechanism extending entirely within the limits of the valve body, this known valve on its turn does not comprise or suggest a valve body with a cylindrical shape, so that this known valve too is awkward in its handling.

A preferred embodiment of the valve according to the invention is characterized in that at the side of the discharge line the channel comprises an internal thread for connecting the discharge line.

This internal thread permits a discharge line comprising corresponding external thread to be threaded into the valve without the need for a reducing flange.

The invention will be explained further in connection with the drawing that shows an embodiment of the valve according to the invention.

Fig. 1 is a cross-sectional view of an embodiment of the valve according to the invention;

Fig. 2 is a side elevational view of the valve of fig. 1;

Fig. 3 is a partial top view of the valve of fig. 1.

The valve 1 comprises a cylindrical valve body 2 forming as it were a flange and in which a channel 3 extends substantially axially, said channel 3 at one side being connectable to a supply line and at the other side to a discharge line. The valve body 2 comprises a number of passing-through bores 4, through which mounting bolts can be passed for mounting the valve 1 between the supply line and the discharge line. For this reason these lines generally comprise flanges having bores that in the mounted position are aligned with the bores 4 of the valve body 2. The bores 4 extend in parallel with the axis of the cylindrical valve body 2.

In a hole 5 in the valve body 2 forming an elongation of the channel part 7 of the channel 3, a screw spindle 6 is adjustably positioned, said screw spindle 6 acting as a valve means for said channel part 7 of the channel 3. For this purpose the screw spindle 6 at its lower end is provided with a sealing head 8 that can entirely or partially shut-off the channel part 7.

The thread 9 of the screw spindle 6 engages an inner thread of a lid 10 that is detachably mounted in an enlarged portion 11 of said hole 5 in the valve body 2. In order to prevent the lid 10 from rotating during turning the screw spindle 6, said lid can be secured to the valve body 2 through a locking means 12.

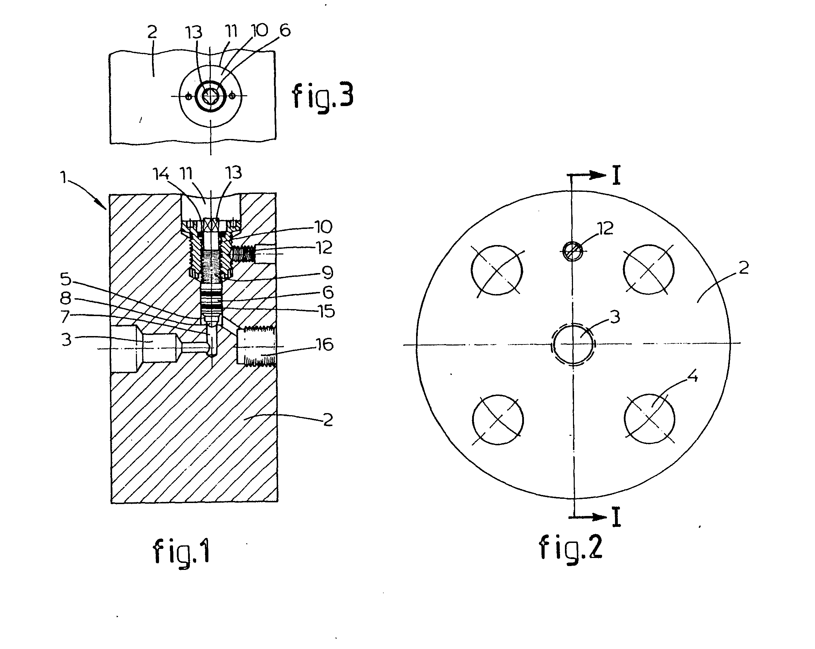

As appears from fig. 1, the screw spindle 6 is entirely positioned within the valve body 2. For the operation of the screw spindle 6 its upper end is positioned in a recessed portion of the upper side of the lid 10, said upper end comprising a connecting stub 13 for a corresponding operation means for the screw spindle 6. As a result it is avoided that unauthorized persons can open and close the valve 2, because for this a special operating means corresponding with the connecting stub 13 is necessary.

Above the thread 9 of the screw spindle 6 a sealing ring 14 is positioned between the lid 10 and the screw spindle 6, said sealing ring 14 being provided for sealing against dust and so on. Moreover, a number of sealing rings 15 are positioned below the thread 9 of the screw spindle 6 between the wall of the hole 5 and the screw spindle 6, said sealing rings 15 together with the screw spindle 6 forming a seal between the enlarged portion 11 of the hole 5 and the channel 3.

The channel 3 comprises at the discharge side an internal thread 16, that is adapted to be connected to a discharge line.

## Claims

1. Valve (1) comprising a valve body (2) having a substantially axially extending channel (3, 7) formed therein, said channel (3) at one side being adapted to be connected to a supply line and at the other side to a discharge line, a valve means (6, 8) positioned in the valve body (2) to shutoff the channel passage (7) entirely or partially, wherein the valve body (2) has one side adapted to be connected to an end of a line comprising a flange and the other side adapted to be connected to an end of a line comprising a thread, the valve body (2) further being provided with passing-through bores (4) through which mounting bolts can extend, characterized in that the valve body (2) substantially forms a cylindrical flange, whereas the dimensions of the flange-shaped valve body (2) are such that the valve means (6, 8) and its operating mechanism (13) as well as the provisions for connecting the valve body to a flanged line and to a threaded line are positioned entirely within the valve body (2).

2. Valve according to claim 1, characterized in that the valve means (6, 8) comprises a spindle (6) that is adjustable in a hole (5) forming an elongation of a portion (7) of the channel (3), the lower end (8) of the spindle (6) being adapted to shut-off this channel portion (7) entirely or partially.

3. Valve according to claim 2, characterized in that the spindle (6) is a screw spindle that is threadably mounted in a lid (10) being disposed in an enlarged portion (11) of the hole (5).

4. Valve according to claim 3, characterized in that the lid (10) is detachably positioned in the hole (5) in the valve body (2) and can be secured by a locking means (12).

5. Valve according to claim 3 or 4, characterized in that the upper end of the screw spindle (6) is positioned in a recessed portion of the upper side of the valve body (2) and is provided with a connecting stub (13) for a corresponding operating means for the screw spindle (6).

6. Valve according to any one of the claims 3—5, characterized in that at least one sealing element (15) is positioned below the thread (9) of the screw spindle (6) between the screw spindle and the wall of the hole (5) in the valve body (2).

7. Valve according to any one of the claims 3—6, characterized in that at least one sealing element (14) is positioned above the thread (9) of the screw spindle (6) between the lid (10) and the screw spindle (6).

8. Valve according to any one of the preceding claims, characterized in that at the side of the discharge line the channel (3) comprises an internal thread (16) for connecting the discharge line.

## Patentansprüche

1. Ventil, bestehend aus einem Ventilgehäuse mit einem im wesentlichen axial im Gehäuse verlaufenden Kanal, welcher am einen Ende mit einer Zuflußleitung und am anderen Ende mit einer Abflußleitung verbindbar ist und einem im Gehäuse angeordneten Ventilglied zum teilweiseh oder vollständigen Verschließen des Durchgangskanals, wobei das Ventilgehäuse derart ausgebildet ist, daß es auf seiner einen Seite mit einem Ende einer Flanschleitung und auf seiner anderen Seite mit einem ein Gewinde tragenden Ende einer Leitung verbindbar ist, und wobei außerdem das Gehäuse Durchgangslöcher für Befestigungsbolzen aufweist, dadurch gekennzeichnet, daß das Ventilgehäuse (2) im wesentlichen einen zylindrischen Flansch bildet, welcher derart bemessen ist, daß das Ventilglied (6, 8) und sein Betätigungsmechanismus (13) ebenso wie die Anordnungen zur Verbindung des Ventilgehäuses mit einer Flanschleitung und mit einer Schraubleitung vollkommen innerhalb des Ventilgehäuses liegen.

2. Ventil nach Anspruch 1, dadurch gekennzeichnet, daß das Ventilglied (6, 8) eine Spindel (6) besitzt, welche in einem eine Verlängerung eines Teiles (7) des Kanals (3) bildenden Loch derart verstellbar ist, daß durch das untere Spindelende (8) das Kanalteil (7) völlig oder teilweise verschließbar ist.

3. Ventil nach Anspruch 2, dadurch gekennzeichnet, daß die Spindel (6) eine Schraubenspindel ist, welche in einem Verschlußteil (10) schraubbar montiert ist, der in einem erweiterten Teil (11) des Loches (5) angeordnet ist.

4. Ventil nach Anspruch 3, dadurch gekennzeichnet, daß das Verschlußteil (10) im Loch (5) des Ventilgehäuses (2) lösbar eingesetzt ist und durch ein Sicherungsorgan (12) fixierbar ist.

5. Ventil nach Anspruch 3 oder 4, dadurch gekennzeichnet, daß das obere Ende der Schraubenspindel (6) in einer Vertiefung an der Oberseite des Ventilgehäuses (2) liegt und mit einem Anschlußkopf (13) für ein entsprechendes Betätigungsorgan für die Spindel versehen ist.

6. Ventil nach irgendeinem der Ansprüche 3 bis 5, dadurch gekennzeichnet, daß wenigstens ein Dichtungselement (15) unter dem Gewinde (9) der Schraubenspindel (6) zwischen der Spindel und der Wandung des Loches (5) im Ventilgehäuse (2) angeordnet ist.

7. Ventil nach irgendeinem der Ansprüche 3 bis 6, dadurch gekennzeichnet, daß wenigstens ein Dichtungselement (14) oberhalb des Gewindes (9) der Schraubenspindel (6) zwischen dem Verschlußteil (10) und der Spindel angeordnet ist.

8. Ventil nach irgendeinem der vorangehenden Ansprüche, dadurch gekennzeichnet, daß auf der Seite der Abflußleitung der Kanal (3) ein Innengewinde (16) zum Einschrauben der Abflußleitung aufweist.

## Revendications

1. Valve (1) comprenant un corps de valve (2) à travers lequel est formé un canal (3, 7) s'étendant sensiblement axialement, ledit canal (3) étant conçu pour être raccordé, sur un premier côté, à une conduite d'alimentation et, sur l'autre côté, à une conduite de décharge, des moyens d'obturation (6, 8) disposés dans le corps de valve (2) pour fermer le passage (7) du canal, entièrement ou partiellement, le corps de valve (2) ayant un côté conçu pour être raccordé à une extrémité d'une conduite comprenant une bride et l'autre côté conçu pour être raccordé à une extrémité d'une conduite comprenant un filetage, le corps de valve (2) étant en outre traversé par des alésages (4) dans lesquels des boulons de montage peuvent passer, caractérisée en ce que le corps de valve (2) forme sensiblement une bride cylindrique, attendu que les dimensions du corps de valve (2) en forme de bride sont telles que les moyens d'obturation (6, 8) et leur mécanisme (13) de commande, ainsi que les moyens pour raccorder le corps de valve à une conduite à bride et à une conduite filetée, sont disposés en totalité à l'intérieur du corps de valve (2).

2. Valve selon la revendication 1, caractérisée en ce que les moyens d'obturation (6, 8) comprennent une tige (6) qui est réglable dans un trou (5) formant un prolongement d'un tronçon (7) du canal (3), l'extrémité inférieure (8) de la tige (6) étant conçue pour fermer ce tronçon (7) du canal entièrement ou partiellement.

3. Valve selon la revendication 2, caractérisée en ce que la tige (6) est une tige à vis qui est montée par vissage dans un chapeau (10) disposé dans une partie élargie (11) du trou (5).

4. Valve selon la revendication 3, caractérisée en ce que le chapeau (10) est placé de façon amovible dans le trou (5) du corps de valve (2) et peut être fixé par un moyen (12) de blocage.

5. Valve selon la revendication 3 ou 4, caractérisée en ce que l'extrémité supérieure de la tige à vis (6) est placée dans une partie évidée de la face supérieure du corps de valve (2) et comporte un embout (13) de raccordement pour un moyen de commande correspondant pour la tige à vis (6).

6. Valve selon l'une quelconque des revendications 3—5, caractérisée en ce qu'au moins un élément (15) d'étanchéité est placé au-dessous du filetage (9) de la tige à vis (6) entre la tige à vis et la paroi du trou (5) du corps de valve (2).

7. Valve selon l'une quelconque des revendications 3—6, caractérisée en ce qu'au moins un élément (14) d'étanchéité est placé au-dessus du filetage (9) de la tige à vis (6) entre le chapeau (10) et la tige à vis (6).

8. Valve selon l'une quelconque des revendications précédentes, caractérisée en ce que, du côté de la conduite de décharge, le canal (3) comprend un filetage intérieur (16) pour le raccordement de la conduite de décharge.

fig.2

fig.3

fig.1